(19) Europäisches Patentamt
European Patent Office
Office européen des brevets

(11) **EP 2 008 899 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **08010238.7**

(22) Anmeldetag: **05.06.2008**

(51) Int Cl.:
*B60K 6/48* (2007.10)          *B60W 20/00* (2006.01)
*B60W 10/02* (2006.01)        *B60W 10/06* (2006.01)
*B60W 10/08* (2006.01)        *B60K 6/387* (2007.10)
*F16D 48/06* (2006.01)

(54) **Verfahren und Vorrichtung zur Reibwertadaption einer in einem Hybridantriebsstrang angeordneten Reibungskupplung**

Method and device for adapting friction coefficient to a friction clutch in a hybrid drive train

Procédé et dispositif pour l'adaptation du coefficient de friction d'un embrayage à friction agencé dans une chaîne de transmission hybride

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.06.2007 DE 102007029208**

(43) Veröffentlichungstag der Anmeldung:
**31.12.2008 Patentblatt 2009/01**

(73) Patentinhaber: **Schaeffler Technologies AG & Co. KG**
**91074 Herzogenaurach (DE)**

(72) Erfinder: **Reuschel, Michael**
**77833 Ottersweier (DE)**

(56) Entgegenhaltungen:
**EP-A- 1 762 452          DE-A1- 10 349 445**
**DE-A1- 19 838 853        DE-A1-102006 048 358**

**Beschreibung**

Die Erfindung betrifft ein Verfahren und eine Vorrichtung zur Reibwertadaption einer in einem Hybridantriebsstrang zwischen einer Elektromaschine und einem Verbrennungsmotor angeordneten, von einem Kupplungsaktor betätigten Reibungskupplung.

In der Offenlegungsschrift DE 198 38 853 A1, die als nächstliegender Stand der Technik angesehen wird und die Merkmale der Präambel des unabhängigen Anspruchs 1 zeigt, wird eine Hybridantriebsvorrichtung für ein Fahrzeug offenbart, die in der Lage ist, das Ansprechen beim Wiederanlassen einer Verbrennungsmaschine während der Fahrt eines Fahrzeugs zu verbessern. Im Ergebnis kann ein Stoß in Folge einer Verzögerung vermindert werden. Die Hybridantriebsvorrichtung für ein Fahrzeug hat eine Verbrennungsmaschine, einen Elektromotor, eine Kupplung, eine Getriebeeinheit und eine Steuereinheit zur Steuerung der anderen Elemente. Die Steuereinheit hat eine Wartezustandsteuereinrichtung zur Realisierung einer konstanten Anlasskennlinie, um das Anlassansprechen beim Anlassen der Verbrennungsmaschine durch Übertragung der Kraft des Elektromotors auf die Verbrennungsmaschine und Steuern des Eingriffsdrucks der Kupplung zu verbessern, um somit die Verbrennungsmaschine in eine Anlassstartposition zu drehen.

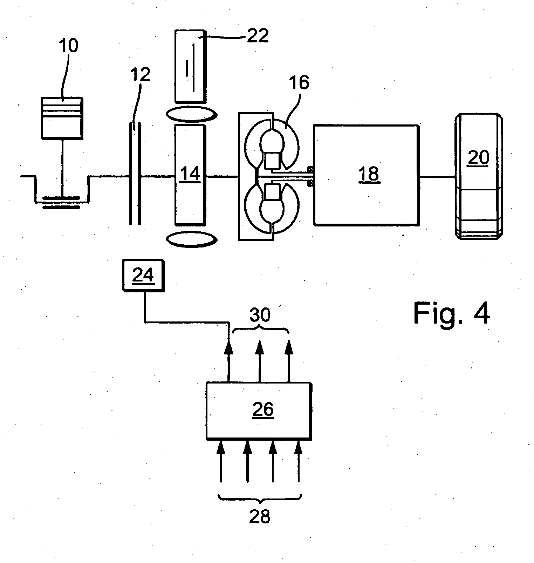

Fig. 4 zeigt eine Prinzipanordnung eines an sich bekannten Hybridantriebsstrangs eines Fahrzeugs. Ein Verbrennungsmotor 10 ist über eine Reibungskupplung 12 mit einer motorisch und generatorisch betreibbaren Elektromaschine 14 verbunden, die wiederum über einen beispielsweise hydraulisch arbeitenden Drehmomentwandler 16 mit einem automatischen Getriebe 18 verbunden ist, das angetriebene Räder 20 des nicht dargestellten Fahrzeugs antreibt. Die Elektromaschine 14 wirkt je nach Betriebszustand mit einem Energiespeicher 22 zusammen, der bei generatorischem Betrieb der Elektromaschine 14 aufgeladen wird und aus dem bei motorischem Betrieb der Elektromaschine 14 Energie entnommen wird.

Die Reibungskupplung 12 wird von einem Kupplungsaktor 24 betätigt, beispielsweise einem Elektromotor.

Zur Steuerung des beispielhaft beschriebenen Antriebsstrangs dient eine elektronische Steuereinrichtung 26 mit Eingängen 28, die mit Sensoren zur Erfassung des Betriebszustandes des Antriebsstrangs verbunden sind, beispielsweise einem Fahrpedalsensor, einem Getriebewahlhebelsensor, einem Drehzahlsensor zur Erfassung der Drehzahl des Verbrennungsmotors 10, einem Lastsensor zur Erfassung der Stellung eines Laststellgliedes des Verbrennungsmotors 10, einem Sensor zur Erfassung der Drehzahl eines Fahrzeugrades usw. Ausgänge 30 der elektronischen Steuereinrichtung 26 sind mit Aktoren und weiteren Steuereinrichtungen zur Steuerung des Betriebs des Verbrennungsmotors, der Elektromaschine 14, des automatischen Getriebes 18 sowie gegebenenfalls des Wandlers 16 verbunden. Dargestellt ist lediglich die Verbindung eines Ausgangs der elektronischen Steuereinrichtung 26 mit dem Kupplungsaktor 24.

Die elektronischen Steuereinrichtung 26 enthält einen Mikroprozessor mit zugehörigen Programm- und Datenspeichern, so dass die jeweiligen Aktoren bzw. Stellglieder abhängig von den Eingangssignalen nach vorbestimmten Programmen gesteuert werden. Der Aufbau und die Funktion des Antriebsstrangs, der in vielfältiger Weise abgeändert werden kann (beispielsweise kann der Wandler 16 entfallen) sind an sich bekannt und werden daher nicht erläutert.

Für einen einwandfreien und komfortablen Betrieb des Antriebsstrangs ist die genaue Kenntnis einer Momentenkennlinie der Kupplung 12 erforderlich, die das jeweils übertragbare Kupplungsmoment in Abhängigkeit von der Stellung des Kupplungsbetätigungsgliedes bzw. des Kupplungsaktors 24 angibt. Eine Eigenart von Reibungskupplungen liegt darin, dass sich ihre Kennlinie abhängig vom Verschleiß der Reibbeläge und anderer Einflussgrößen ändert. Dazu ist bekannt, die in der Steuereinrichtung 26 abgelegte Momentenkennlinie von Zeit zu Zeit zu adaptieren, das heißt eine abgelegte Sollkennlinie durch Anfahren bestimmter Betriebszustände der Kupplung 12 mit vorbestimmen Istzuständen zu vergleichen und bei einer Abweichung zwischen den Istwerten und den Sollwerten die gespeicherte Momentenkennlinie zu adaptieren.

Der Erfindung liegt die Aufgabe zugrunde, vorteilhafte Möglichkeiten zur Adaption der Momentenkennlinie bzw. zur Adaption des Reibwertes einer an einem Hybridantriebsstrang eines Fahrzeugs enthaltenen Reibungskupplung anzugeben.

Der das Verfahren betreffende Teil der Erfindungsaufgabe wird mit den Merkmalen des Anspruchs 1 gelöst.

Die Unteransprüche 2 bis 7 sind auf vorteilhafte Durchführungsformen des erfindungsgemäßen Verfahrens gerichtet.

Der Anspruch 8 kennzeichnet den grundsätzlichen Aufbau einer erfindungsgemäßen Vorrichtung.

Ein wesentliches Element der Erfindung liegt darin, dass bei einem Hybridantriebsstrang, bei dem die Brennkraftmaschine mittels einer betätigbaren Reibungskupplung mit einer E-Maschine verbindbar ist und angedreht bzw. angelassen werden kann, bei Kenntnis des Trägheitsmoments, des Schleppmoments, der Drehzahl sowie gegebenenfalls weiterer Betriebsparameter des Verbrennungsmotors das von der Kupplung übertragenen Moment genau ermittelt werden kann, so dass es mit einem Sollmoment verglichen werden kann und dieses Sollmoment bei einer Abweichung zwischen dem ermittelten Istmoment und dem Sollmoment adaptiert werden kann.

Bei einem erfindungsgemäßen Verfahren zur Reibwertadaption einer in einem Hybridantriebsstrang zwischen einer Elektromaschine und einem Verbrennungsmotor angeordneten, von einem Kupplungsaktor betätigten Reibungskupplung wird der Reibwert mittels eines von der Reibungskupplung übertragenen Moments adaptiert, das bei einem Anlassen des Verbrennungsmotors mittels der Elektromaschine ermittelt wird.

Bevorzugt enthält ein erfindungsgemäßes Verfahren folgende Schritte:

- Betätigen der Reibungskupplung zum Andrehen des Verbrennungsmotors entsprechend einer alten Momentenkennlinie derart, dass sie ein Sollmoment überträgt, das sicher zum Andrehen des Verbrennungsmotors ausreicht,
- Erfassen der Drehzahländerung des Verbrennungsmotors,
- Ermitteln des Istkupplungsmoments aus der Drehzahländerung, dem Massenträgheitsmoment und einem Moment des Verbrennungsmotors,
- Adaptieren der alten Momentenkennlinie derart, dass das Soll moment dem Istmoment entspricht.

Das Istkupplungsmoment kann bei noch nicht befeuertem Verbrennungsmotor ermittelt werden.

Ein Schleppmoment des Verbrennungsmotors wird vorteilhafterweise in Abhängigkeit von Betriebsparametern des Verbrennungsmotors berücksichtigt.

Das Istkupplungsmoment kann bei bereits ein Moment erzeugendem Verbrennungsmotor ermittelt werden.

Die Adaption erfolgt beispielsweise inkrementell.

Die Adaption kann in einer Durchführungsform des erfindungsgemäßen Verfahrens erst bei voll geschlossener Reibungskupplung erfolgen.

Eine Vorrichtung zur Reibwertadaption einer in einem Hybridantriebsstrang zwischen einer Elektromaschine und einem Verbrennungsmotor angeordneten, von einem Aktor betätigten Reibungskupplung, enthält eine elektronische Steuereinrichtung mit Eingängen, die mit Sensoren zur Erfassung von Betriebszuständen des Hybridantriebsstrangs verbunden ist und wenigstens einem mit dem Kupplungsaktor verbundenen Ausgang, welche Steuereinrichtung eine Momentenkennlinie, die ein übertragbares Kupplungsmoment in Abhängigkeit von der Stellung des Kupplungsaktors angibt, und ein Programm enthält, das die Momentenkennlinie entsprechend einem der vorhergehend genannten Verfahren adaptiert.

Die Reibungskupplung, die im Beispiel der Fig. 4 eine Trennkupplung ist, die nur zum Anlassen und Abschalten des Verbrennungsmotors verwendet wird, kann bei fehlendem Wandler 16 (Fig. 4) auch eine Anfahrkupplung sein, wenn beispielweise der Wandler fehlt und bei leerer Batterie mit dem Verbrennungsmotor angefahren werden muss. Das Getriebe kann ein automatisiertes Handschaltgetriebe sein, ein CVT-Getriebe oder ein Planetengetriebe oder ein manuell betätigtes Handschaltgetriebe sein.

Die Erfindung wird im Folgenden anhand schematischer Zeichnungen beispielsweise und mit weiteren Einzelheiten erläutert.

Es stellen dar:

Fig. 1 und 2 einen Anlassvorgang mit Adaption des Reibwertes der Kupplung,

Fig. 3 eine Adaption einer Momentenkennlinie und

Fig. 4 die bereits beschriebene schematische Darstellung eines an sich bekannten Hybridantriebsstrangs.

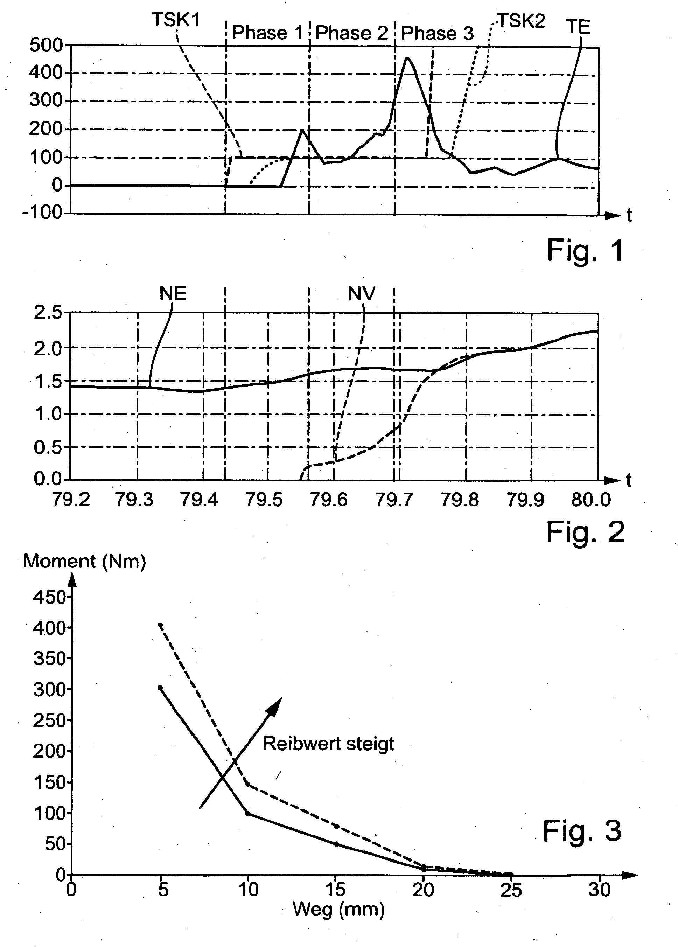

In den Fig. 1 und 2 ist auf der Abszisse die Zeit in Sekunden dargestellt. Die Ordinate stellt in Fig. 1 Momente, beispielsweise in Nm dar und in Fig.2 Drehzahlen in 1000/min.

Die voll ausgezogenen Kurve TE der Fig. 1 gibt ein im Rahmen der Adaption ermitteltes bzw. geschätztes Drehmoment an; die gestrichelte Kurve TSK1 gibt ein von der Steuereinrichtung ausgegebenes, von der Kupplung 12 zu übertragendes Sollkupplungsmoment an, die strichpunktierte Kurve gibt das an der Kupplung berechnete Kupplungsmoment TSK2 an.

In Fig. 2 gibt die durchgezogenen Kurve NE die Drehzahl der Elektromaschine 14 an; die gestrichelte Kurve gibt die Drehzahl NV des Verbrennungsmotors 10 an.

Dargestellt ist ein Fall, bei dem der Verbrennungsmotor 10 durch Schließen der Kupplung 12 mittels der Elektromaschine 14 angedreht wird und am Ende der dargestellten Zeitdauer selbst Drehmoment abgibt.

Zum Zeitpunkt etwa 79,43 wird von der Steuereinrichtung der Kupplungsaktor 24 derart angesteuert, dass die Kupplung ein Sollkupplungsmoment TSK1 übertragen soll, das deutlich über dem Moment liegt, das zum Losbrechen bzw. Andrehen der Kurbelwelle des Verbrennungsmotors 10 erforderlich ist. Das von der Steuereinrichtung entsprechend der in der Steuereinrichtung gespeicherten Momentenkennlinie sowie der Aktorposition bzw. dem Kupplungsistweg berechnete Kupplungsmoment TSK2 folgt dem Sollkupplungsmoment TSK1 mit zeitlicher Verzögerung. Die Drehzahl NE der Elektromaschine 14, die vorteilhafterweise geregelt ist, ändert sich zunächst kaum, obwohl das von der Elektromaschine 14 abgegebene Moment sich zum Zeitpunkt von etwa 79,51 zum Losbrechen der Kurbelwelle des Verbrennungsmotors 10 deutlich erhöht. Zum Zeitpunkt etwa 79,55 beginnt die Kurbelwelle des Verbrennungsmotors 10 entsprechend der Kurve NV zu drehen und beschleunigt ihre Drehung bis zum Zeitpunkt von etwa 79,74. wo sie annähernd gleich mit der Drehzahl NE der Elektromaschine wird. Die Drehzahlen NV und NE nehmen weiter zu, da der Verbrennungsmotor inzwischen selbst Leistung bzw. Drehmoment abgibt.

Wie aus Fig. 1 und 2 ersichtlich kann das Andrehen bzw. ein Wiederstart des Verbrennungsmotors 10 mit Hilfe der Elektromaschine 14 in drei Phasen unterteilt werden.

In der ersten Phase wird von der elektronischen Steuereinrichtung 26 (Fig. 4) ein Sollkupplungsmoment TSK1 ausgegeben, das so hoch ist, dass der Verbrennungsmotor sicher angeschleppt bzw. angedreht wird. Mit den von der Steuereinrichtung erfassten Sensorengrößen wie beispielsweise einem Kupplungsistweg und der gespeicherter Momentenkennlinie wird ein Kupplungsmoment TSK2 berechnet, das bei aktuell richtiger in der Steuereinrichtung gespeicherter Momentenkennlinie stationär dem Moment TSK1 entspricht. In der ersten Phase kann bedingt durch die Verzögerungszeiten der Kupplung und die Drehzahlerfassung keine plausible Drehzahl NV des Verbrennungsmotors erkannt werden.

In der anschließenden zweiten Phase kann eine gute Zuordnung zwischen dem Istkupplungsmoment und der Drehzahländerung bzw. Beschleunigung des Verbrennungsmotors erfolgen. Der Verbrennungsmotor wird in dieser zweiten Phase geschleppt und erzeugt noch kein Moment.

In der dritten Phase, in der das Sollkupplungsmoment TSK1 auf volles Schließen der Kupplung erhöht wird, kann der Verbrennungsmotor selbsttätig Moment erzeugen und zu seiner Beschleunigung beitragen. Die Motordrehzahl erreicht, sobald die Kupplung ganz geschlossen ist, die Drehzahl der Elektromaschine und steigt dann weiter an.

Gemäß einer ersten Durchführungsform der Erfindung wird vorgeschlagen, in der zweiten Phase eine Reibwertadaption bzw. Momentenkennlinienadaption durchzuführen, indem die Momentenbilanz zwischen dem antreibenden Istkupplungsmoment und dem von dem Verbrennungsmotor her wirkenden Moment ausgewertet wird. Es gilt:

$$TE = J*dNV/dt + M_{schlepp},$$

wobei

| | |
|---|---|
| Mschlepp: | Schleppmoment (Reibungsmoment) zum Drehen der Brennkraftmaschine, |
| J: | Massenträgheitsmoment des Verbrennungsmotors, |
| dNV/dt: | zeitliche Änderung der Drehzahl der Kurbelwelle des Verbrennungsmotors. |

Aus dem Massenträgheitsmoment, der zeitlichen Änderung der Drehzahl und dem Schleppmoment des Verbrennungsmotors kann somit das aktuelle reale Istupplungsmoment genau berechnet bzw. ermittelt werden. Dieses ermittelte Istkupplungsmoment TE wird mit dem Sollkupplungsmoment TSK1 bzw. TSK2 verglichen; aus dem Vergleich kann der aktuelle Reibwert ermittelt werden, so dass der Reibwert adaptiert werden kann. Weiter kann bei einer Abweichung zwischen TSK und TE die Momentenkennlinie adaptiert werden. Ist das Istkupplungsmoment größer als das Sollkupplungsmoment, muss die Momentenkennlinie entsprechend angehoben werden bzw. der in der Steuereinrichtung abgelegte Reibwert muss erhöht werden. Ist das ermittelte Istkupplungsmoment TE kleiner als das Sollkupplungsmoment, muss die Momentenkennlinie abgesenkt werden bzw. der steuerungsintere Reibwert muss vermindert werden.

In Fig. 3 gibt die durchgezogene Linie einer Sollkupplungsmomentenkennlinie an, in der für verschiedene Betätigungswege eines Betätigungsgliedes der Kupplung bzw. der Stellung des Kupplungsaktors 24 übertragbare Kupplungsmomente angegeben sind. Die gestrichelte Kurve gibt gemessene Momente bzw. eine Istkennlinie an, deren jeweilige Werte über den Sollwerten liegen, so dass die durchgezogene Sollkennline in Richtung auf die gestrichelte Istkennlinie adaptiert werden muss (im dargestellten Beispiel ist der tatsächlich vorhandene Reibwert größer als der vom System angenommene Sollreibwert).

Für die die Korrektur bzw. Adaption der in der elektronischen Steuereinrichtung verwendeten Momentenkennlinie bzw. des Reibwertes können unterschiedliche mathematische Anpassungsverfahren eingesetzt werden. Denkbar sind beispielsweise Filterfunktionen oder ein inkrementelles Verändern der Momentenkennlinie bzw. des Reibwertes, so dass es während der Adaption zu keinen sprunghaften Veränderungen kommt. Für den Zeitpunkt, an dem die Momentenkennlinie bzw. der Reibwert angepasst werden - d.h. die alte Momentenkennlinie korrigiert wird -, sind ebenfalls unterschiedliche Möglichkeiten vorhanden. Beispielsweise kann diese Übernahme/ Korrektur in einer Phase durchgeführt werden, in der die Kupplung vollständig geschlossen ist, so dass es bei der Übernahme zu keinen ungewollten Kupplungsreaktionen kommt, die zu Komfortbeeinträchtigungen oder Schwingungen führen können. Bei großen Abweichungen zwischen Sollwerten und Istwerten kann noch während der Kupplungsschlupfphase die Übernahme erfolgen, wobei je nach Adaptionsverfahren darauf geachtet werden muss, dass es zu keinen sprungartigen Änderungen kommt. Es bieten sich entsprechende Rampen-/Begrenzungsfunktionen für die Adaption der Momentenkennlinie bzw. den intern abgelegten Reibwert an.

Für die Adaption ist es wichtig, das Motorschleppmoment Mschlepp möglichst genau zu kennen. Da dieses Schleppmoment beispielsweise von der Motordrehzahl und/oder der Temperatur abhängt, ist das Schleppmoment in der Steuereinrichtung vorteilhafterweise in Form einer Kennlinie oder eines Kennfeldes oder sonstwie mittels entsprechender mathematischer Beziehungen derart abgelegt, dass für den jeweiligen Betriebspunkt das genaue Schleppmoment in die Ermittlung des Istmoments der Kupplung eingeht.

Bei einer abgeänderten Durchführungsform des erfindungsgemäßen Verfahrens kann auch in der dritten Phase, in der der Verbrennungsmotor nach dem Anlassen selbst Leistung entfaltet, die Adaption erfolgen. In der obigen Gleichung zur Ermittlung des Istkupplungsmoments geht dann das vom Motor selbst erzeugte Motormoment ein, das aus dem Motorkennfeld beispielsweise abhängig von der Stellung eines Laststellgliedes des Verbrennungsmotors und dessen Drehzahl entnommen wird. Für die Gleichung gilt dann:

$$TE = J*DN/dt - Mmot, wobei$$

wobei
Mmot das von Verbrennungsmotor 10 erzeugte Drehmoment ist.

Für die Durchführung der Adaption gilt das vorstehend betreffend die erstgenannte Durchführungsform des erfindungsgemäßen Verfahrens Gesagte.

**Bezugszeichenliste**

10   Verbrennungsmotor
12   Reibungskupplung
14   Elektromaschine
16   Wandler
18   automatisches Getriebe
20   Rad
22   Energiespeicher
24   Kupplungsaktor
26   elektronische Steuereinrichtung
28   Eingänge

**Patentansprüche**

1.  Verfahren zur Reibwertadaption einer in einem Hybridantriebsstrang eines Fahrzeugs zwischen einer Elektromaschine (14) und einem Verbrennungsmotor (10) angeordneten, von einem Kupplungsaktor betätigten Reibungskupplung (12), bei welchem Verfahren der Reibwert der Reibungskupplung (12) mittels eines von der Reibungskupplung übertragenen Moments adaptiert wird, das bei einem Anlassen des Verbrennungsmotors mittels der Elektromaschine ermittelt wird, **dadurch gekennzeichnet, dass** das Verfahren folgende Schritte enthält:

    - Betätigen der Reibungskupplung (12) zum Andrehen des Verbrennungsmotors (10) entsprechend einer alten Momentenkennlinie der Reibunskupplung (12), welche das jeweils übertragbare Kupplungsmoment in Abhängigkeit von der Stellung des Kupplungsaktuator (24) angibt derart, dass sie ein Sollkupplungsmoment (TSK) überträgt, das sicher zum Andrehen des Verbrennungsmotors ausreicht,

    - Erfassen der zeitlichen Drehzahländerung (dNU/dt) der Kurbelwelle des Verbrennungsmotors (2),
    - Ermitteln des von der Reibungkupplung (12) übertragenen aktuellen realen Istkupplungsmoments (TE) aus der zeitlichen Drehzahländerung der Kurbelwelle des Verbrennungsmotors (10), dem Massenträg-, heitsmoment (7) des Verbrennungsmotors (10) und einem Schleppmoment (Mschlepp) des Verbrennungsmotors (10) entsprechend der Formel TE = 7 * dNV/dt, wobei NV die aktuelle Drehzahl des Verbrennungsmotors (10) und t den aktuellen Zeitpunkt darstellen,
    - Adaptieren der alten Momentenkennlinie mit Hilfe von Filterfunktionen oder inkrementellen Verändern derart, dass das Sollkupplungsmoment (TSK) dem Istkupplungsmoment (TE) entspricht , wobei wenn das aktuelle reale Istkupplungsmoment (TE) größer als das Sollkupplungsmoment (TSK) ist, muss der in der Steuereinrichtung abgelegte Reibwert erhöht werden und wenn das ermittelte aktuelle reale Istkupplungsmoment (TE) kleiner als das Sollkupplungsmoment (TSK) ist, muss der steuerungsinterne Reibwert vermindert werden..

2.  Verfahren nach Anspruch 1, wobei das Istkupplungsmoment bei noch nicht befeuertem Verbrennungsmotor ermittelt wird.

3.  Verfahren nach Anspruch 2, wobei ein Schleppmoment des Verbrennungsmotors (10) in Abhängigkeit von Betriebsparametern des Verbrennungsmotors berücksichtigt wird.

4.  Verfahren nach Anspruch 1, wobei das Istkupplungsmoment bei bereits ein Moment erzeugendem Verbrennungsmotor (10) ermittelt wird.

5.  Verfahren nach einem der Ansprüche 1 bis 4, wobei die Übernahme der Adaptionsergebnisse inkrementell erfolgt.

6.  Verfahren nach einem der Ansprüche 1 bis 4, wobei die Übernahme der Adaptionsergebnisse erst bei voll geschlossener Reibungskupplung (12) erfolgt.

7.  Vorrichtung zur Reibwertadaption einer in einem Hybridantriebsstrang eines Fahrzeugs zwischen einer Elektromaschine (14) und einem Verbrennungsmotor (10) angeordneten, von einem Aktor (24) betätigten Reibungskupplung (12), enthaltend eine elektronische Steuereinrichtung (26) mit Eingängen (28), die mit Sensoren zur Erfassung von Betriebszuständen des Hybridantriebsstrangs des Fahrzeugs verbunden ist und wenigstens einem mit dem Kupplungsaktor (24) verbundenen Ausgang (26), Welche Steuereinrichtung eine Momentenkennlinie, die ein übertragbare Kupplungsmoment in Abhängigkeit von der Stellung des Kupplungsaktors angibt, und ein Programm enthält, welches die Momentenkennlinie entsprechend einem Verfahren nach einem der Ansprüche 1 bis 6 adaptiert.

**Claims**

1. Method for adapting a friction coefficient of a friction clutch (12) which is arranged in a hybrid drive train of a vehicle between an electric machine (14) and an internal combustion engine (10) and is activated by a clutch actuator, in which method the friction coefficient of the friction clutch (12) is adapted by means of a torque which is transmitted by the friction clutch and is determined by means of the electric machine when the internal combustion engine is started, **characterized in that** the method contains the following steps:

   - activation of the friction clutch (12) in order to start up the internal combustion engine (10) in accordance with an dd torque characteristic curve of the friction clutch (12), which specifies the respectively transmissible clutch torque as a function of the position of the clutch actuator (24), in such a way that said friction clutch (12) transmits a setpoint clutch torque (TSK) which is certain to be sufficient to start up the internal combustion engine,
   - detection of the change in the rotational speed (dNV/dt) of the crankshaft of the internal combustion engine (10) over time,
   - determination the current real actual clutch torque (TE), which is transmitted by the friction clutch (12), from the change in the rotational speed of the crankshaft of the internal combustion engine (10) over time, the moment of mass inertia (7) of the internal combustion engine (10) and a drag torque ($M_{schlepp}$) of the internal combustion engine (10) in accordance with the formula $TE = 7*dNV/dt$, where NV represents the current rotational speed of the internal combustion engine (10) and t represents the current time, and
   - adaptation of the old torque characteristic curve using filter functions or incremental changes in such a way that the setpoint clutch torque (TSK) corresponds to the actual clutch torque (TE), wherein if the current real actual clutch torque (TE) is greater than the setpoint clutch torque (TSK), the friction coefficient stored in the control device must be increased, and if the determined current real actual clutch torque (TE) is smaller than the setpoint clutch torque (TSK), the control-internal friction coefficient must be reduced.

2. Method according to Claim 1, wherein the actual clutch torque is determined when the internal combustion engine has not yet been fired.

3. Method according to Claim 2, wherein a drag torque of the internal combustion engine (10) is taken into account as a function of operating parameters of the internal combustion engine.

4. Method according to Claim 1, wherein the actual clutch torque is determined when the internal combustion engine (10) is already producing a torque.

5. Method according to one of Claims 1 to 4, wherein the transfer of the adaptation results takes place incrementally.

6. Method according to one of Claims 1 to 4, wherein the transfer of the adaptation results does not take place until the friction clutch (12) is fully closed.

7. Device for adapting a friction coefficient of a friction clutch (12) which is arranged in a hybrid drive train of a vehicle between an electric machine (14) and an internal combustion engine (10) and is activated by an actuator (24),
containing an electronic control device (26) which has input (28) and is connected to sensors for detecting operating states of the hybrid drive train of the vehicle, and at least one output (26) which is connected to the clutch actuator (24), which control device contains a torque characteristic curve, which specifies a transmissible clutch torque as a function of the position of the clutch actuator, and a programme which adapts the torque characteristic curve in accordance with a method according to one of Claims 1 to 6.

**Revendications**

1. Procédé d'adaptation du coefficient de frottement d'un accouplement à friction (12), actionné par un actionneur d'accouplement et disposé dans une chaîne cinématique hybride d'un véhicule entre une machine électrique (14) et un moteur à combustion interne (10), procédé selon lequel le coefficient de frottement de l'accouplement à friction (12) est adapté au moyen d'un couple transmis par l'accouplement à friction qui est déterminé lors d'un lancement du moteur à combustion interne à l'aide de la machine électrique, **caractérisé en ce que** le procédé comprend les étapes suivantes :

   - actionnement de l'accouplement à friction (12) en vue d'amorcer la rotation du moteur à combustion interne (10) conformément à une ancienne courbe caractéristique de couple de l'accouplement à friction (12), laquelle indique le couple d'accouplement pouvant à chaque fois être transmis en fonction de la position de l'actionneur d'accouplement (24), de telle sorte qu'il transmet un couple d'accouplement de consigne (TSK) qui suffit avec certitude pour amorcer la rotation du moteur à combustion interne ;

- détection de la variation dans le temps de la vitesse de rotation (dNV/dt) du vilebrequin du moteur à combustion interne (10) ;

- détermination du couple d'accouplement effectif (TE) réel actuel transmis par l'accouplement à friction (12) à partir de la variation dans le temps de la vitesse de rotation du vilebrequin du moteur à combustion interne (10), du moment d'inertie des masses (J) du moteur à combustion interne (10) et d'un moment de traînée ($M_{schlepp}$) du moteur à combustion interne (10) conformément à la formule TE = J x dNV/dt, NV désignant la vitesse de rotation actuelle du moteur à combustion interne (10) et t l'instant actuel ;

- adaptation de l'ancienne courbe caractéristique de couple à l'aide de fonctions de filtrage ou d'une modification incrémentale de telle sorte que le couple d'accouplement de consigne (TSK) corresponde au couple d'accouplement effectif (TE), le coefficient de frottement enregistré dans le dispositif de commande devant être augmenté si le couple d'accouplement effectif (TE) réel actuel est supérieur au couple d'accouplement de consigne (TSK) et le coefficient de frottement interne à la commande devant être diminué si le couple d'accouplement effectif (TE) réel actuel déterminé est inférieur au couple d'accouplement de consigne (TSK).

2. Procédé selon la revendication 1, selon lequel le couple d'accouplement effectif est déterminé alors que le moteur à combustion interne n'est pas encore allumé.

3. Procédé selon la revendication 2, selon lequel il est tenu compte d'un moment de traînée du moteur à combustion interne (10) en fonction des paramètres de fonctionnement du moteur à combustion interne.

4. Procédé selon la revendication 1, selon lequel le couple d'accouplement effectif est déterminé alors que le moteur à combustion interne (10) produit déjà un couple.

5. Procédé selon l'une des revendications 1 à 4, selon lequel la validation des résultats de l'adaptation s'effectue de manière incrémentale.

6. Procédé selon l'une des revendications 1 à 4, selon lequel la validation des résultats de l'adaptation s'effectue uniquement lorsque l'accouplement à friction (12) est complètement fermé.

7. Dispositif d'adaptation du coefficient de frottement d'un accouplement à friction (12), actionné par un actionneur (24) et disposé dans une chaîne cinématique hybride d'un véhicule entre une machine électrique (14) et un moteur à combustion interne (10), comprenant un dispositif de commande électronique (26) muni d'entrées (28), lesquelles sont reliées à des capteurs en vue de détecter des états de fonctionnement de la chaîne cinématique hybride du véhicule, et d'au moins une sortie (26) reliée à l'actionneur d'accouplement (24), lequel dispositif de commande contient une courbe caractéristique de couple qui indique un couple d'accouplement pouvant être transmis en fonction de la position de l'actionneur d'accouplement, ainsi qu'un programme qui adapte la courbe caractéristique de couple conformément à un procédé selon l'une des revendications 1 à 6.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19838853 A1